# EUROPÄISCHE PATENTSCHRIFT

(11) **EP 3 173 284 B1**
(45) Veröffentlichungstag und Bekanntmachung des Hinweises auf die Patenterteilung: **11.12.2019**
(21) Anmeldenummer: 16167254.8
(22) Anmeldetag: 27.04.2016
(51) Int. Cl.: B60L 50/75, B60W 20/00, H01M 8/04298

(54) **VERFAHREN ZUM BETREIBEN EINER BRENNSTOFFZELLE**
METHOD FOR OPERATING A FUEL CELL
PROCEDE DE FONCTIONNEMENT D'UNE PILE A COMBUSTIBLE

(30) Priorität: 25.11.2015 EP 15196234
(43) Veröffentlichungstag der Anmeldung: 31.05.2017
(73) Patentinhaber: Magna Steyr Fahrzeugtechnik AG & Co KG, 8041 Graz (AT)
(72) Erfinder: GUTRUF, Philipp, 80686 München (DE); GÖLLNER, Julian, 8010 Graz (AT); MARTIN, Michael, 8047 Graz (AT)
(74) Vertreter: Zangger, Bernd

(56) Entgegenhaltungen:
- DE-A1- 4 422 636
- DE-A1-102007 051 819
- DE-A1-102013 207 244
- US-A1- 2014 336 855

## Beschreibung

### Gebiet der Erfindung

Die vorliegende Erfindung betrifft ein Verfahren zum Betreiben einer Brennstoffzelle eines Hybridfahrzeuges, wobei das Hybridfahrzeug einen elektrischen Antrieb mit einem Energiespeicher umfasst, sowie die Brennstoffzelle umfasst. Die Erfindung betrifft auch ein Hybridfahrzeug, umfassend eine Steuereinheit die dazu ausgebildet ist, ein solches Verfahren auszuführen.

### Stand der Technik

Verfahren zum Betreiben einer Brennstoffzelle eines Hybridfahrzeuges, wobei das Hybridfahrzeug einen elektrischen Antrieb mit einem Energiespeicher sowie die Brennstoffzelle, als zusätzliche Energiequelle, umfasst, sind an sich bekannt.

Derartige Hybridfahrzeuge verwenden zumindest einen Elektromotor als Antrieb und eine Brennstoffzelle als zusätzliche Energiequelle zur Erhöhung der Reichweite des Fahrzeuges. Die Brennstoffzelle stellt daher einen sogenannten "Range-Extender" des Hybridfahrzeuges dar. Der Antrieb eines solchen Fahrzeuges kann beispielsweise primär oder ausschließlich über den elektrischen Antrieb erfolgen. Die Brennstoffzelle kann jedenfalls dazu genutzt werden, den Energiespeicher des elektrischen Antriebs aufzuladen, um so die Reichweite des elektrischen Fahrens zu erhöhen. Das Fahrzeug kann, je nach Aufbau, eventuell auch direkt über die Brennstoffzelle angetrieben werden. Ein derartiges Fahrzeug ist in der Offenlegungsschrift DE102013207244 A1 (Ford Global Technologies) offenbart.

Im Vergleich mit Hybridfahrzeugen mit Verbrennungsmotor treten bei Fahrzeugen mit Brennstoffzelle zwei gravierende Unterschiede auf:
- Die Optimierung des Wirkungsgrads des Zusatzantriebs ist nicht so relevant, da der Wirkungsgrad einer Brennstoffzelle auf einem breiten Leistungsbereich nahezu konstant ist.
- Die Optimierung auf die Dynamik des Zusatzantriebs ist wichtiger, da zur Erhöhung der Lebensdauer eine Brennstoffzelle nicht vergleichbar dynamisch betrieben werden kann wie ein Verbrennungskraftmotor. Häufiges Ein- und Ausschalten einer Brennstoffzelle kann zudem die Lebensdauer verringern. Der Offenlegunsschrift DE4422636 A1 (Bayerische Motorenwerke) offenbart ein Hybridfahrzeug, bei dem häufiges Aktivieren und Deaktivieren des Motors vermieden wird.

Daher kann eine Betriebsstrategie eines Hybridfahrzeuges mit Verbrennungsmotor nicht einfach für Fahrzeuge mit Brennstoffzellen übernommen werden. Häufiges Ein- und Ausschalten wie z.B. bei Start-Stop Verkehr oder beim Rekuperieren von Energie sowie hohe Dynamik entsprechend dem Fahrerwunsch hätte negative Auswirkungen auf die Lebensdauer.

Daher sollte die Betriebsstrategie der Brennstoffzelle während der Fahrt möglichst wenig Dynamik und wenig On / Off Zyklen haben, um die Charakteristiken der Brennstoffzelle zu berücksichtigen.

Hinzu kommt die Leistungsbereitstellung durch die Brennstoffzelle in Form eines Range Extenders (nachfolgend auch REX genannt). Bei einem Range Extender ist Prinzip bedingt die Leistung des REX geringer als die der Antriebsmotoren. Wenn die Batterie, der Energiespeicher des elektrischen Antriebs, leer ist, kann also nicht mit voller Leistung, sondern nur mit der Leistung des REX gefahren werden. Da dies Einbußen bzw. Limitierungen in der Fahrbarkeit mit sich bringt, sollte dieser Zustand vermieden werden. Es muss also vor Phasen mit hohem Leistungsbedarf rechtzeitig die Energie durch den REX in der Batterie gesammelt / gepuffert werden, um so das Leistungsdefizit des REX zu vermeiden bzw. für den Fahrer nicht spürbar werden zu lassen.

Zusätzlich haben Brennstoffzellen prinzipbedingt im Betrieb immer eine von Null verschiedene minimale Leistung. Das heißt ein "Leerlauf" wie bei Verbrennungsmotoren ist bei Brennstoffzellen nicht möglich. Gerade in Stadtbereichen ist das Problematisch, wenn der durchschnittliche Leistungsbedarf des Fahrzeuges geringer als die minimale Leistung der Brennstoffzelle ist. Hierbei würde dies zu einem kontinuierlichen Laden der Batterie führen.

### Zusammenfassung der Erfindung

Es ist daher eine Aufgabe der Erfindung, ein Verfahren zum Betreiben einer Brennstoffzelle eines Hybridfahrzeuges anzugeben, wobei das Hybridfahrzeug einen elektrischen Antrieb mit einem Energiespeicher umfasst, sowie die Brennstoffzelle umfasst, das die technischen Eigenschaften von Brennstoffzellensystemen als Zusatzantrieb bzw. als zusätzliche Energiequelle und von elektrischen Antrieben berücksichtigt, insbesondere der weniger dynamischen Leistungsbereitstellung von Brennstoffzellen Rechnung trägt.

Die Lösung der Aufgabe erfolgt durch ein Verfahren zum Betreiben einer Brennstoffzelle eines Hybridfahrzeuges, wobei das Hybridfahrzeug einen elektrischen Antrieb mit einem Energiespeicher umfasst, sowie die Brennstoffzelle umfasst, wobei durch die Brennstoffzelle der Energiespeicher aufladbar ist, wobei die Brennstoffzelle abhängig von einem ersten Kennfeld aktiviert und deaktiviert wird, wobei eine erste Eingangsgröße des ersten Kennfeldes ein aktueller, über einen ersten definierten Betrachtungszeitraum bestehender Leistungsbedarf des Hybridfahrzeuges ist, und falls die Brennstoffzelle aktiviert ist, die Brennstoffzelle gemäß die weitere Merkmale des Anspruchs 1 betrieben wird.

Erfindungsgemäß wird zum optimalen Betrieb einer Brennstoffzelle in einem Range-Extender Fahrzeug die Brennstoffzelle ein- und ausgeschaltet primär abhängig von einem aktuellen Leistungsbedarf des Hybridfahrzeuges, wobei der Leistungsbedarf jedoch nicht durch einen einzigen momentanen Wert gemessen bzw. berechnet wird, sondern der Leistungsbedarf über einen bestimmten Betrachtungszeitraum, beispielsweise einige Sekunden oder Minuten, berücksichtigt wird und nur bei Anliegen eines ausreichend hohen oder niedrigen momentanen oder durchschnittlichen Leistungsbedarfs über diesen gesamten Betrachtungszeitraum ein Aktivieren oder Deaktivieren der Brennstoffzelle erfolgt.

Bevorzugt wird daher erfindungsgemäß kein vorausschauendes System genutzt, um den zukünftigen leistungsbedarf zu ermitteln, sondern es dient ein aktueller, die unmittelbare Vergangenheit berücksichtigender, Leistungsbedarf als Basis, um dementsprechend den Brennstoffzellen Range Extender anzusteuern, also zu starten oder zu stoppen bzw. zu aktivieren oder zu deaktivieren.

Ein Kennfeld bedeutet dabei erfindungsgemäß zumindest ein zweidimensionales Kennfeld, also eine Kennlinie, bevorzugt aber ein mehrdimensionales Kennfeld. Das erste Kennfeld wird auch Kennfeld A genannt.

Die Brennstoffzelle wird daher zumindest abhängig von einer Kennlinie aktiviert und - abhängig von derselben oder einer unterschiedlichen Kennlinie - deaktiviert, wobei die Eingangsgröße der Kennlinie der aktuelle, über den ersten definierten Betrachtungszeitraum bestehende Leistungsbedarf des Hybridfahrzeuges ist.

Der aktuelle Leistungsbedarf berücksichtigt dabei vorzugsweise sowohl den Leistungsbedarf für den Antrieb des Fahrzeuges als auch eventuelle Leistungsbedarfe von Nebenverbrauchern bzw. Nebenaggregaten.

Durch die Brennstoffzelle ist der elektrische Energiespeicher des Fahrzeuges aufladbar und die Energie des Energiespeichers kann zumindest unter anderem auch zum Antrieb des Hybridfahrzeuges und zur Versorgung von Zusatzaggregaten verwendet werden.

Vorzugsweise liegt der erste definierte Betrachtungszeitraum zwischen 1 Sekunde und mehreren Minuten, vorzugsweise bis zu 5 Minuten, bevorzugt zwischen 1 Sekunde und 60 Sekunden, besonders bevorzugt zwischen 3 und 20 Sekunden.

Vorzugsweise ist eine zweite Eingangsgröße des ersten Kennfeldes ein aktueller Ladezustand des Energiespeichers.

Bevorzugt ist eine dritte Eingangsgröße des ersten Kennfeldes eine aktuelle Fahrzeuggeschwindigkeit.

Besonders bevorzugt ist die aktuelle Fahrzeuggeschwindigkeit als Eingangsgröße des ersten Kennfeldes eine über einen zweiten definierten Betrachtungszeitraum bestehende Fahrzeuggeschwindigkeit, wobei der zweite definierte Betrachtungszeitraum zwischen 1 Sekunde und mehreren Minunten, vorzugsweise bis zu 5 Minuten, bevorzugt zwischen 1 Sekunde und 30 Sekunden liegt, besonders bevorzugt zwischen 2 und 20 Sekunden.

Vorzugsweise weist das erste Kennfeld zumindest eine erste Hysterese auf, so dass die Kennlinie zum Aktivieren der Brennstoffzelle abhängig von der ersten Eingangsgröße verschieden ist von der Kennlinie zum Deaktivieren der Brennstoffzelle abhängig von der ersten Eingangsgröße, das heißt der Grenzwert zum Aktivieren der Brennstoffzelle unterscheidet sich bei gleichem aktuellem Wert der Eingangsgröße, also des aktuellen zeitgefilterten Leistungsbedarfs, vom Grenzwert zum Deaktivieren der Brennstoffzelle.

Beispielsweise wird die Brennstoffzelle, falls die Brennstoffzelle aktiviert ist, mit einer geforderten Leistung betrieben, die abhängig von einem zweiten Kennfeld ist, wobei eine erste Eingangsgröße des zweiten Kennfeldes eine aktuelle Leistungsanforderung durch einen Fahrer des Hybridfahrzeuges ist.

Das zweite Kennfeld kann wieder zwei oder mehrdimensional sein, kann daher eine Kennlinie sein. Das zweite Kennfeld wird auch Kennfeld B genannt.

Beispeilsweise die erste Eingangsgröße des zweiten Kennfeldes eine über einen dritten definierten Betrachtungszeitraum bestehende aktuelle Leistungsanforderung, vorzugsweise zwischen 1 Sekunde und mehreren Minuten, vorzugsweise bis zu 5 Minuten, bevorzugt zwischen 1 Sekunde und 60 Sekunden, besonders bevorzugt zwischen 3 und 20 Sekunden.

Beispielsweise weist das zweite Kennfeld zumindest eine erste Hysterese auf, so dass die Kennlinie zum Erhöhen der geforderten Leistung der Brennstoffzelle abhängig von der ersten Eingangsgröße verschieden ist von der Kennlinie zum Reduzieren der geforderten Leistung der Brennstoffzelle abhängig von der ersten Eingangsgröße.

Besonders bevorzugt ist die Kennlinie zum Erhöhen der geforderten Leistung der Brennstoffzelle abhängig von der ersten Eingangsgröße treppenförmig ausgebildet, um die Dynamik zu verringern.

Eine zweite Eingangsgröße des zweiten Kennfeldes kann ein aktueller Ladezustand des Energiespeichers sein.

### Kurzbeschreibung der Zeichnungen

Die Erfindung wird im Folgenden beispielhaft unter Bezugnahme auf die Zeichnungen beschrieben.
- Fig. 1: zeigt ein Diagramm zur Charakteristik einer Brennstoffzelle.
- Fig. 2: zeigt schematisch die Energieversorgung an Bord eines Hybridfahrzeugs mit einer Brennstoffzelle.
- Fig. 3: zeigt schematisch eine Zielsetzung eines erfindungsgemäßen Verfahrens.
- Fig. 4: zeigt ein Ablaufschema zu einer ersten Variante einer Referenzleistungsermittlung.
- Fig. 5: zeigt ein Ablaufschema zu einer zweiten Variante einer Referenzleistungsermittlung.
- Fig. 6: zeigt ein erstes Kennfeld für ein erfindungsgemäßes Verfahren.
- Fig. 7: zeigt Kennlinien zu einer möglichen Abhängigkeit des ersten Kennfeldes von der Fahrzeuggeschwindigkeit.
- Fig. 8: zeigt zwei schematische Ablaufschemen zur Berücksichtigung eines Betrachtungszeitraums.
- Fig. 9: zeigt ein zweites Kennfeld für ein erfindungsgemäßes Verfahren.
- Fig. 10: zeigt mögliche Auswirkungen einer zeitlichen Hysterese auf die von der Brennstoffzelle abzugebende Leistung.
- Fig. 11: zeigt ein zweites Kennfeld in einer zweiten Variante.
- Fig. 12: zeigt ein zweites Kennfeld in einer dritten Variante.
- Fig. 13: zeigt schematisch ein zweidimensionales zweites Kennfeld, abhängig vom Ladezustand des Energiespeichers.
- Fig. 14: zeigt ein drittes Kennfeld bzw. eine dritte Kennlinie für ein erfindungsgemäßes Verfahren.
- Fig. 15: zeigt Module in einem Steuergerät eines erfindungsgemäßen Hybridfahrzeuges.
- Fig. 16: zeigt beispielshaft ein Ergebnis eines erfindungsgemäßen Verfahrens.

### Detaillierte Beschreibung der Erfindung

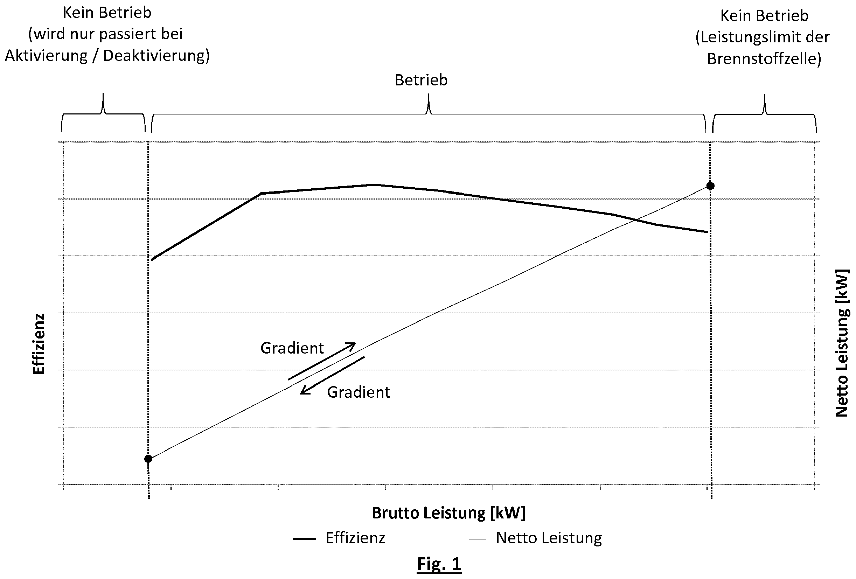

Fig. 1 zeigt ein Diagramm zur Charakteristik einer Brennstoffzelle: Dargestellt ist annähernd die Nettoleistung (dünne Linie) auf der Y-Achse im Verhältnis zur erforderlichen Bruttoleistung der Brennstoffzelle auf der x-Achse des Diagramms, sowie die Effizient (dicke Linie) der Brennstoffzelle, ebenfalls auf der Y-Achse.

Eine Brennstoffzelle zeigt im Vergleich zu einem konventionellen Verbrennungsmotor, nachfolgend auch VKM genannt, folgende Unterschiede bzw. Charakteristik:
- Nahezu konstanter Wirkungsgrad über weiten Leistungsbereich (außer bei sehr geringen und sehr hohen Leistungen). Daher ist die Optimierung der Betriebsstrategie auf einen wirkungsgradoptimalen Punkt nicht von hoher Bedeutung
- Die Leistungsänderung ist abhängig vom Leistungsgradienten bzw. Stromgradienten. Eine Brennstoffzelle ist nicht so dynamisch wie eine VKM betreibbar, zudem geht hohe Dynamik auf Kosten der Lebensdauer
- Brennstoffzellen haben stets eine Minimale Leistungsabgabe. Es gibt keinen "Leerlauf" wie bei einer VKM, sondern nur OFF, also ausgeschaltet, oder eine Leistung größer einer Minimalleistung.

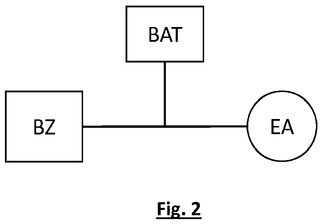

Fig. 2 zeigt schematisch ein Hybridfahrzeug mit einer Brennstoffzelle BZ als Range-Extender, nachfolgend auch REX genannt.

Ein Batterieelektrischer REX mit Brennstoffzelle BZ besteht aus einem elektrischen Antriebsstrang EA, mit einem oder mehreren ElektroMotoren, einer Batterie bzw. Energiespeicher BAT sowie einer (oder mehreren) Brennstoffzelle BZ. Die hauptsächliche Energie zur Versorgung der Elektromotoren kommt aus der Batterie BAT. Die Brennstoffzelle BZ bzw. der REX wird genutzt zur Reichweitenverlängerung.

Die Dimensionierung der Elektromotorleistung ist höher als die maximale Leistung des REX, also der Brennstoffzelle. Der REX muss lediglich die Durchschnittsleistung bereitstellen, die Leistungsspitzen werden über die Batterie (den Energiespeicher) abgefangen.

Falls die Batterie leer bzw. entladen ist und so gut wie keine Leistung mehr bereitstellen kann, ist die Leistung der Antriebsmotoren auf die Leistung des REX beschränkt.

Herausforderungen, die durch die Erfindung zumindest in manchen Ausführungsformen gelöst werden können sind:
- Betriebszustand der Brennstoffzelle so wenig wie möglich ändern (wenig Dynamik, wenig On / Off Zyklen) bzw. wenn möglich konstant halten
- Balancing der Leistungsbereitstellung ((tief)entladene Batterie vermeiden)
- Wirkungsgrad optimieren, Betrieb im mittleren Leistungsbereich
- Keine vorausschauenden Systeme vorhanden

Folgender Zielkonflikt kann erfindungsgemäß gelöst werden. Primär steht das Nutzen der elektrischen Energie der Batterie im Vordergrund, da in der heutigen Zeit die Infrastruktur zum Laden der Batterie besser ausgebaut ist als zum Nachfüllen der Brennstofftanks der Brennstoffzelle (beispielsweise mit Wasserstoff). Zudem soll die Brennstoffzelle so wenig wie möglich An- und Abgeschaltet werden. Spätmöglichstes Einschalten und geringmöglichstes Nutzen der Brennstoffzelle bis zum Abstellen des Fahrzeuges wäre ein optimales Ziel. Es müssen aber auch die zuvor genannten Herausforderungen berücksichtigt werden.

Es gibt für ein Range-Extender System zwei Grenzfälle:
- Stadtfahrt: erforderliche Durchschnittsleistung ist kleiner als die minimale Leistung der Brennstoffzelle. Das Fahrzeug soll so lange wie möglich Energie aus der Batterie entnehmen ohne die Brennstoffzelle zu verwenden. Die Brennstoffzelle soll erst bei niedrigem SOC Stand (State of Charge, Ladezustand des Energiespeichers) genutzt bzw. aktiviert werden.
- Autobahnfahrt: erforderliche Durchschnittsleistung ist größer als die maximale Leistung der Brennstoffzelle. Die Brennstoffzelle muss sofort gestartet werden, um möglichst lang Energie aus Batterie und Brennstoffzelle zu entnehmen bzw. um zu schnelles Entladen der Batterie zu vermeiden.

Prinzipiell könnte dieses Problem wie im Stand der Technik bekannt mittels auf Informationen von Navigationssystemen basierender Betriebsstrategien gelöst werden. Da hier aber keine vorrausschauenden Systeme verwendet werden, muss anhand des durchschnittlichen Leistungsbedarfes der letzten X Sekunden der Start der Brennstoffzelle abgeschätzt werden.

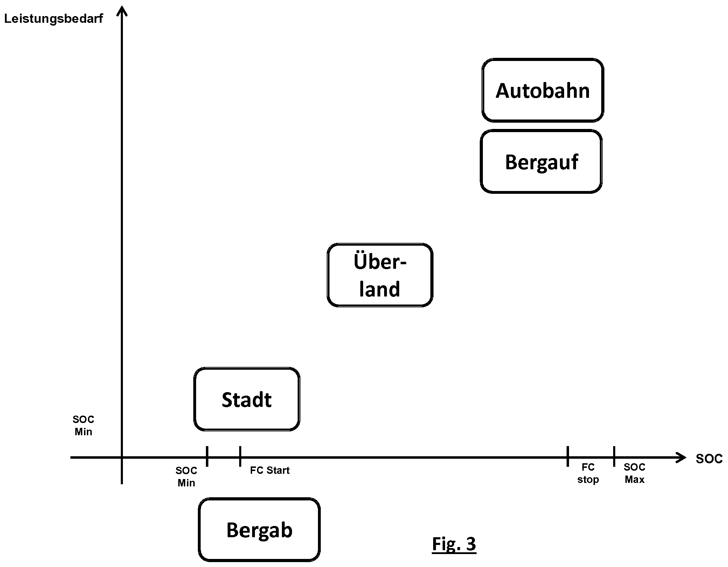

In der folgenden Abbildung, Fig. 3, ist die Intension der Betriebsstrategie anhand verschiedener Bereiche grob dargestellt:
- bei Stadtfahrt (City): Start der Brennstoffzelle erst bei niedrigerem Batterie-Ladezustand (SOC)
- Überlandfahrt (Extra Urban): Start der Brennstoffzelle bei mittleren SOC
- Autobahnfahrt (Highway): Sofort Brennstoffzellen Start (auch bei hohem SOC)
- Längere Bergauffahrt (Up hill): Sofort Brennstoffzellen Start (auch bei hohem SOC)
- Längere Bergabfahrt (Down hill): Start Brennstoffzelle nie oder nur bei sehr niedrigem SOC

Überlagert wird dieser Zusammenhang durch die Nutzung von Nebenverbrauchern durch den Fahrer (Heizen, Kühlen) und die hierfür erforderlichen Leistungen.

Primäre Eingangsgröße für das Verfahren ist dabei nicht die Durchschnittsgeschwindigkeit. Mittels Analyse der Geschwindigkeit könnten eventuell auch die Zustände Stadt, Überland und Autobahn detektiert werden, allerdings nicht Bergauf- und Bergabphasen. Des Weiteren ist ein Brennstoffzellenfahrzeug ein "Zero Emission Vehicle", was bedeutet das lokal keine Schadstoffemissionen wie bei einem Verbrennungsmotor erzeugt werden. Dies bedeutet wiederum das lokal emissionsfreies Fahren z.B. in einer Stadt immer möglich ist. Eine gesonderte Erkennung von Stadtfahrten spielt daher keine wesentliche Rolle.

Als primäre Eingangsgröße wird daher der gefilterte elektrische Leistungsbedarf des Systems, also von elektrischem Antrieb und Nebenverbrauchern, verwendet, also ein aktueller, über einen ersten definierten Betrachtungszeitraum bestehender Leistungsbedarf des Hybridfahrzeuges.

Mit dieser Eingangsgröße lassen sich auch Bergab- und Bergauffahrten erkennen.

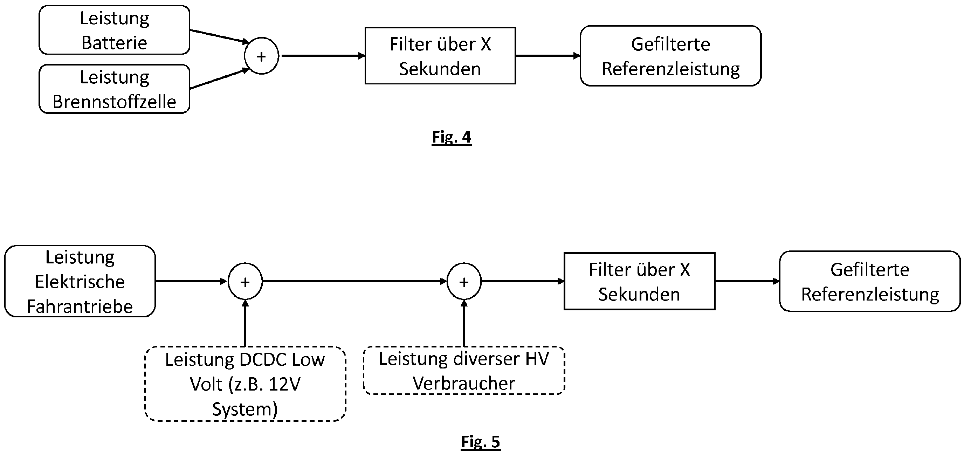

Diese Eingangsgröße, der aktuelle gefilterte Leistungsbedarf, die Referenzleistung, kann je nach Signalverfügbarkeit über folgende Pfade berechnet werden, die in Fig. 4 und Fig. 5 dargestellt sind.

Fig. 4 zeigt ein Ablaufschema zu einer ersten Variante einer Referenzleistungsermittlung.

Anhand der Leistungsbilanz aus Batterie und Brennstoffzelle wird berechnet, welche Leistung in Nebenverbraucher und Elektrischem Fahrantrieb abfällt. Die gesamte momentane Leistung wird über den vorgegebenen Betrachtungszeitraum, X Sekunden, gefiltert, so dass kurzzeitige Schwankungen zu keiner Aktivierung oder Deaktivierung der Brennstoffzelle führen.

Fig. 5 zeigt ein Ablaufschema zu einer zweiten Variante einer Referenzleistungsermittlung.

Der Leistungsbedarf wird direkt aus der anliegenden elektrischen Leistung an den elektrischen Fahrantrieben und an den Nebenverbrauchern berechnet. Wieder erfolgt eine Filterung über den Betrachtungszeitraum, also X Sekunden.

Die Formulierungen "Filterung" über einen Betrachtungszeitraum oder aktuelle, über einen ersten, zweiten oder dritten definierten Betrachtungszeitraum ermittelte Eingangsgrößen sind hier weit zu verstehen und es ist darunter beispielsweise eine Mittelwertbildung über einen kürzeren oder längeren definierten Zeitraum oder eine gleitende Mittelwertbildung von vorhergehenden erfassten Werten einer Eingangsgröße mit dem aktuellen letzten Wert dieser Eingangsgröße zu verstehen oder jede andere Art der mathematische Verknüpfung der Werte der Eingangsgrößen, genauso, wie eine Filterung zumindest eines vorhergehenden Wertes einer Eingangsgröße mit dem aktuellen letzten Wert dieser Eingangsgröße.

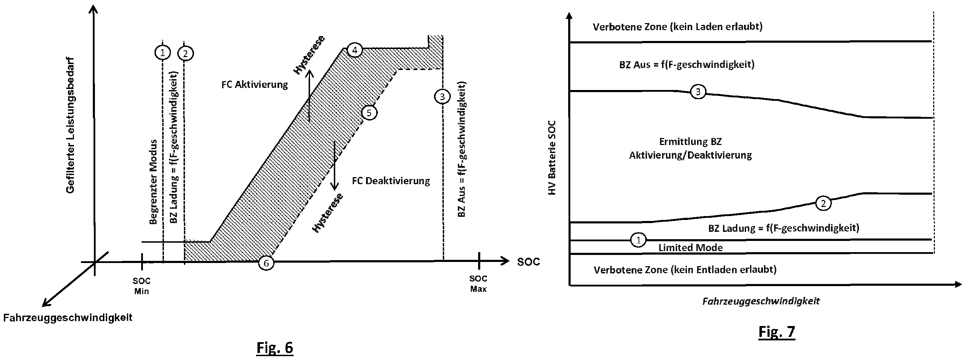

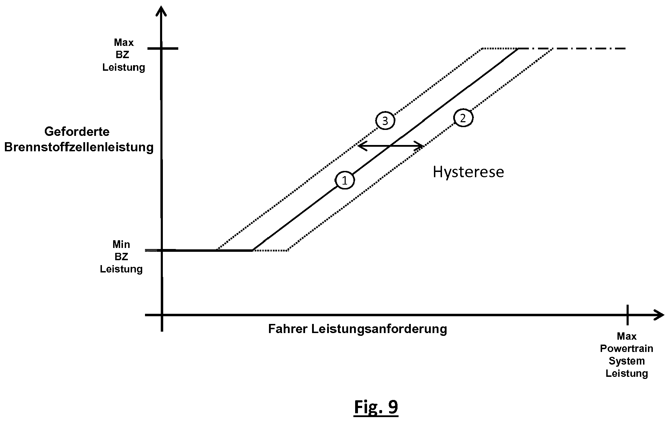

Die erfindungsgemäße Betriebsstrategie wird vorzugsweise durch zwei Kennfelder definiert. Das erste Kennfeld (Fig. 6) beschreibt, wann die Brennstoffzelle generell aktiviert oder deaktiviert wird. Das zweite Kennfeld (Fig. 9, Fig. 11, Fig. 12) beschreibt, mit welcher Leistung die Brennstoffzelle betrieben wird.

Fig. 6 zeigt das erste Kennfeld, die Schwellwerte für die Referenzleistung (aktueller gefilterter Leistungsbedarf) zum Aktivieren und Deaktivieren der Brennstoffzelle (Y-Achse), abhängig vom Ladezustand (SOC) des Energiespeichers. Das erste Kennfeld wird definiert durch folgende Kennlinien:
- Die Batterie ist definiert durch einen nutzbare Kapazität, der Betriebsbereich liegt zwischen einem Minimum Ladezustand SOC_Min und einem Maximum-Ladezustand SOC_Max (SOC = State of charge = Ladezustand der Batterie).
   - Kennlinie 1: unter einem definierten SOC wird die Brennstoffzelle stets mit maximal möglicher Leistung betrieben um ein zu tiefes Entladen der Batterie zu vermeiden
   - Kennlinie 2: unter einem weiteren definierten SOC, der eine Funktion der Fahrzeug-Geschwindigkeit sein kann, wird die Brennstoffzelle ebenfalls ohne Berücksichtigung des aktuellen gefilterten Leistungsbedarfes aktiviert.
   - Kennlinie 3: über einem weiteren definierten SOC, der wieder von der Fahrzeug-Geschwindigkeit abhängen kann, wird die Brennstoffzelle deaktiviert (um Speicher für mögliche Rekuperationsenergie frei zu halten).
   - Kennlinie 4: über einer definierten Referenz-Leistung, die abhängig vom SOC also dem Ladezustand des Energiespeichers ist, wird die Brennstoffzelle aktiviert.
   - Kennlinie 5: unter einer weiteren definierten Referenz-Leistung, die abhängig vom SOC also dem Ladezustand des Energiespeichers ist, wird die Brennstoffzelle deaktiviert. Diese bleibt dennoch mindestens aktiv, bis mindestens SOC Wert 6 erreicht ist und wird spätestens abgeschaltet, wenn Kennlinie 3 erreicht ist. Kennlinie 5 stellt eine Hysterese in Bezug auf Leistung und SOC also Ladezustand dar, um zu häufiges Ein- und Ausschalten der Brennstoffzelle zu vermeiden.

Eingangsgrößen sind für dieses Verfahren:
- Gefilterter Leistungsbedarf (über X Sekunden)
- Gefilterte Fahrzeuggeschwindigkeit (über X Sekunden)

Prinzipiell werden alle Kennlinien als 1D Kennlinie (1 Eingangsgröße) definiert um den Speicherbedarf, Applikations- und Programmierungsaufwand gering zu halten. Ferner können aber die Kennlinien 4 und 5 ebenfalls als 2D Kennfelder (Eingangsgröße Leistung und Geschwindigkeit) definiert werden. Dies bietet den Vorteil einer weiteren Hysterese zusätzlich bezogen auf die Fahrzeuggeschwindigkeit.

Hinzu kommt des Weiteren eine zeitliche Hysterese von X Sekunden. Ist zum Beispiel die Leistung nur kurzzeitig unterhalb Kennlinie 5 und geht nach y Sekunden, wobei y < X, wieder über diese Kennlinie zurück, bleibt die Brennstoffzelle aktiv.

Fig. 7 zeigt eine mögliche Abhängigkeit der Aktivierung und Deaktivierung der Brennstoffzelle von der Fahrzeuggeschwindigkeit und vom Ladezustand (SOC) des Energiespeichers. Dabei sind wieder die Kennlinien 1, 2 und 3 gemäß Fig. 6 eingezeichnet. Die Kennlinien 2 und 3 sind Geschwindigkeitsabhängig. Zwischen den Kennlinien 2 und 3 verläuft ein je nach Fahrzeuggeschwindigkeit unterschiedlich breiter Bereich der erfindungsgemäßen Ermittlung der Aktivierung oder Deaktivierung der Brennstoffzelle, abhängig vom gefilterten Leistungsbedarf, also dem aktuellen, über einen ersten definierten Betrachtungszeitraum bestehenden Leistungsbedarf des Hybridfahrzeuges.

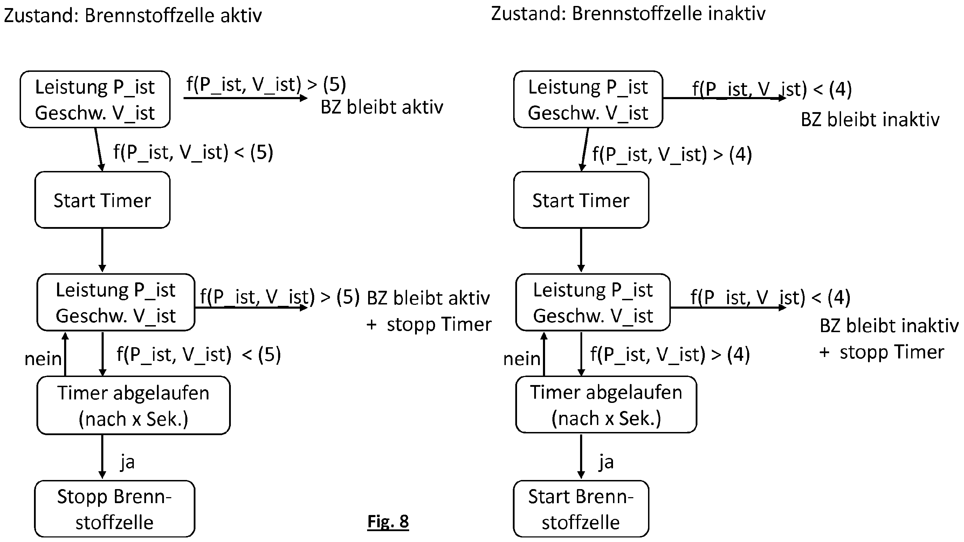

Fig. 8 zeigt zwei schematische Ablaufschemen zur Berücksichtigung des Betrachtungszeitraums (x Sekunden) links, in einem Zustand in dem die Brennstoffzelle bereits aktiv ist und daher das Deaktivieren der Brennstoffzelle geprüft wird, rechts in einem Zustand in dem die Brennstoffzelle deaktiviert ist und daher das Aktivieren der Brennstoffzelle geprüft wird.

Zur Darstellung links in Fig. 8: Die Brennstoffzelle ist zunächst aktiv. Es wird geprüft ob ein aus dem aktuellen, momentanen Leistungsbedarf P_ist und der aktuellen, momentanen Fahrzeuggeschwindigkeit V_ist gebildeter Wert f(P_ist, V_ist) kleiner ist, als der durch die Kennlinie 5 (siehe Fig. 6) vorgegebene Grenzwert. Ist das nicht der Fall, bleibt die Brennstoffzelle aktiv. Andernfalls wird ein Timer gestartet und X Sekunden laufend geprüft, ob der angegebene momentane Leistungsbedarf f(P_ist, V_ist) inzwischen doch wieder größer als der Grenzwert geworden ist, woraufhin ein Deaktivieren der Brennstoffzelle unterbleiben würde. Erst wenn bis zum Ablauf des Timers, also nach X Sekunden, der Grenzwert nie überschritten wurde, wird die Brennstoffzelle tatsächlich gestoppt, also deaktiviert.

Analog wird in der rechten Abbildung der Fig. 8 bei deaktivierter Brennstoffzelle auch X Sekunden lang gewartet ob die Kennlinie 4 (gemäß Fig. 6) unterschritten wird. Nur wenn dies nicht der Fall ist wird nach X Sekunden die Brennstoffzelle aktiviert. Der Betrachtungszeitraum X kann für die Aktivierung der Brennstoffzelle auch unterschiedlich vom Betrachtungszeitraum X für die Deaktivierung der Brennstoffzelle sein.

Fig. 9 zeigt beispielshaft ein zweites Kennfeld in einer ersten Variante.

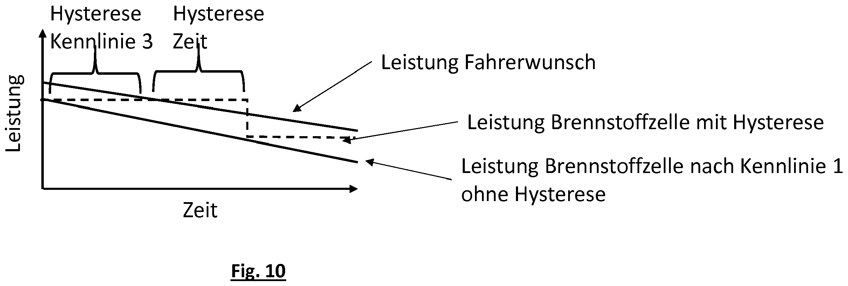

Das zweite Kennfeld wird beschrieben durch folgende Kennlinien:
- Der Fahrerwunsch / die Fahrerwunschleistung ist begrenzt durch die maximale Leistungsverfügbarkeit des elektrischen Antriebsstranges
- Die mögliche Brennstoffzellenleistung ist definiert durch eine maximale und minimale Brennstoffzellenleistung. Ein "Leerlauf" wie bei einem Verbrennungsmotor ist nicht möglich.
- Kennlinie 1: die geforderte Leistung der Brennstoffzelle wird definiert durch eine Funktion, die von der aktuellen Leistungsanforderung durch einen Fahrer des Hybridfahrzeuges abhängt, f(Fahrerwunsch), die insbesondere mittels eines Gaspedals oder Fahrpedals durch den Fahrer angefordert werden kann.
- Kennlinie 2 und Kennlinie 3: eine Hysterese kann definiert durch einen fixen Wert sein, oder es kann eine Funktion abhängig von der aktuellen Leistungsanforderung (f(Fahrerwunsch)) für die Hysterese zwischen Kennlinie 2 und Kennlinie 3 definiert werden. Die Hysterese ist notwendig, um die Dynamik der Brennstoffzelle (häufiger Wechsel der Leistungsanforderung) gering zu halten. Die Phasen in welchen die Brennstoffzelle über längere Zeit mit konstanter Leistung betrieben wird erhöhen sich somit.
- Ebenfalls kann, wie zum Ablaufschema Fig. 8 weiter oben beschrieben, die Leistungsänderung ebenfalls mit einer zeitlichen Hysterese überlagert werden (wie in der Fig. 10 gezeigt).

Fig. 10 zeigt die möglichen Auswirkungen einer solchen zeitlichen Hysterese auf die von der Brennstoffzelle abzugebende Leistung. Dargestellt ist die durch den Fahrer unmittelbar angeforderte Leistung (gerade Linie oben), die nach Kennlinie 1 gemäß Fig. 9 ohne Hysterese berechnete angeforderte Leistung der Brennstoffzelle (gerade Linie unten) und die mit zeitlicher Hysterese berechnete angeforderte Leistung (treppenförmige Linie), die eine verringerte Dynamik der Brennstoffzelle ermöglicht.

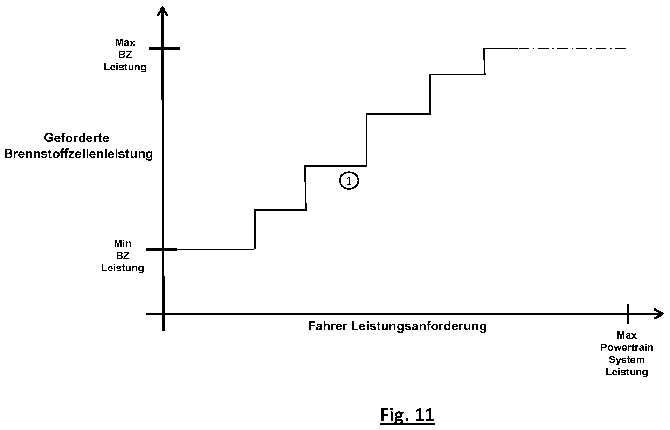

Fig. 11 zeigt ein zweites Kennfeld in einer zweiten Variante. Dabei ist die Kennlinie 1 nicht stetig, sondern treppenförmig, also mit Bereichen konstanter Leistung, ausgebildet. Die Phasen in denen die Brennstoffzelle über längere Zeit mit konstanter Leistung und damit ohne Dynamik betrieben wird, erhöhen sich somit. Hysterese-Kennlinien wie Kennlinie 2 und Kennlinie 3 aus Fig. 9 sind in dieser Grafik nicht eingezeichnet, währen jedoch ebenfalls möglich.

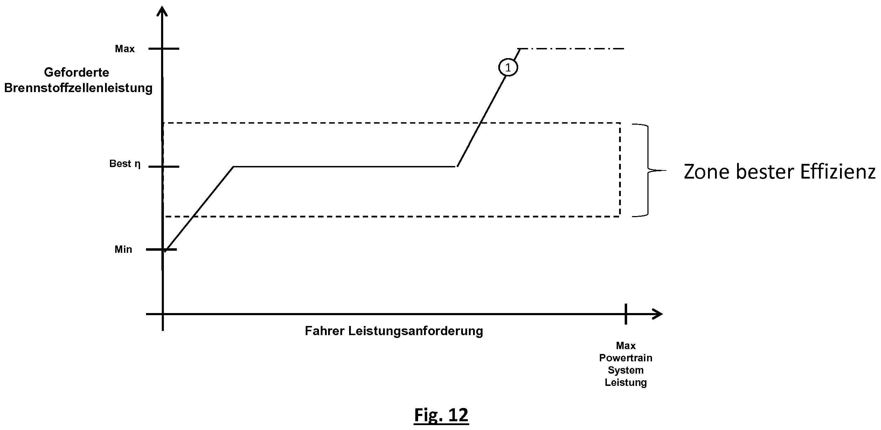

Fig. 12 zeigt ein zweites Kennfeld in einer dritten Variante. Die Brennstoffzelle hat einen optimalen Wirkungsradbereich (Best eta). Damit kann die Kennlinie 1 als Funktion (f(Fahrerwunsch)) so definiert werden, dass sie möglichst lang in diesem Bereich des optimalen Wirkungsgrades betrieben wird. Die Kennlinie 1 weist daher eine längeren horizontalen Verlauf der berechneten angeforderten Leistung für einen relativ großen Bereich der Leistungsanforderung durch den Fahrer auf. Die Hysterese-Kennlinien 2 und 3 sind in dieser Grafik wieder nicht eingezeichnet, jedoch möglich.

Eingangsgröße (x-Achse) der zweiten Kennlinie ist jeweils die gefilterte Leistungsanforderung über X Sekunden, also eine über einen dritten definierten Betrachtungszeitraum bestehende aktuelle Leistungsanforderung.

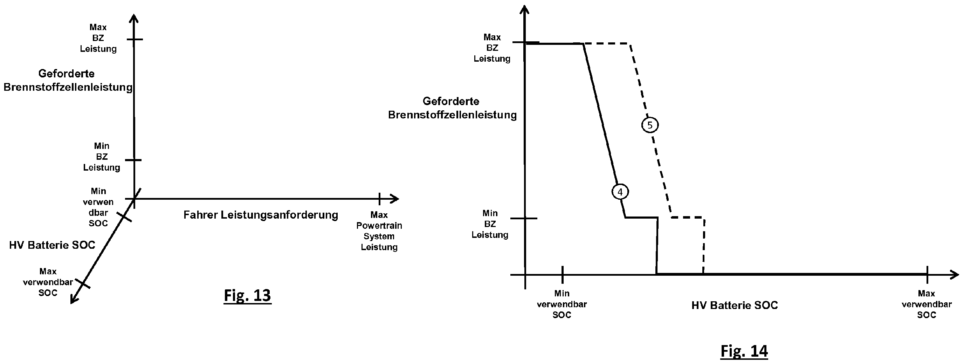

Zusätzlich kann als Eingangsgröße der Ladezustand des Energiespeichers (SOC der HV Batterie) verwendet werden. Je nach Parametrisierung der Kennlinie aus dem zweiten Kennfeld kann es aufgrund der Kennlinienparametrisierung selbst oder auch aufgrund der Hysterese dazu kommen, dass der durchschnittliche Leistungsbedarf größer ist als die Leistungsanforderung an die Brennstoffzelle. Dies würde zu einem zusätzlichen Entladen der HV Batterie führen. Unter dem Aspekt des Zielkonfliktes der Betriebsstrategie zwischen Leistungsbereitstellung, Wirkungsgrad und Lebensdauer ist dies gewollt. Allerdings muss ein Zustand zu niedrigen HV Batterie-Ladezustandes vermieden werden. Daher wird bevorzugt die Leistungsanforderung an die Brennstoffzelle (zweites Kennfeld) zusätzlich beeinflusst durch die Überlagerung mit einer Kennlinie, die abhängig vom SOC des Energiespeichers ist (Fig. 13).

Falls in der Steuereinheit des Hybridfahrzeuges 2D-Kennfelder implementiert werden können, kann das zweite Kennfeld - in allen gezeigten Variationen - ebenfalls abhängig vom Ladezustand des Energiespeichers (HV Batterie SOC) dargestellt werden. Dies ist exemplarisch gezeigt in Fig. 13.

Falls eine Realisierung von 2D Kennfeldern in der Steuereinheit nicht möglich oder nicht erwünscht ist, kann auch eine überlagerte Kennlinie, nachfolgend dritte Kennlinie oder drittes Kennfeld oder Kennfeld C genannt, implementiert werden. Diese dritte Kennlinie beschreibt die berechnete angeforderte Leistung abhängig vom Ladezustand des Energiespeichers (HV Batterie SOC) - siehe Fig. 14.

Die letztendliche Leistungsanforderung an die Brennstoffzelle ergibt sich dann aus dem Maximum der angeforderten Leistung aus dem zweiten Kennfeld und der dritten Kennlinie/dritten Kennfeld / Kennfeld C.

Das Parametrisierung der dritten Kennlinie selbst (linear, treppenförmig, etc.) ist hierbei frei wählbar. Zusätzlich zur Basiskennlinie 4 kann eine Hysteresekennlinie 5 implementiert werden, um die Dynamik der Brennstoffzelle auch hier zu reduzieren.

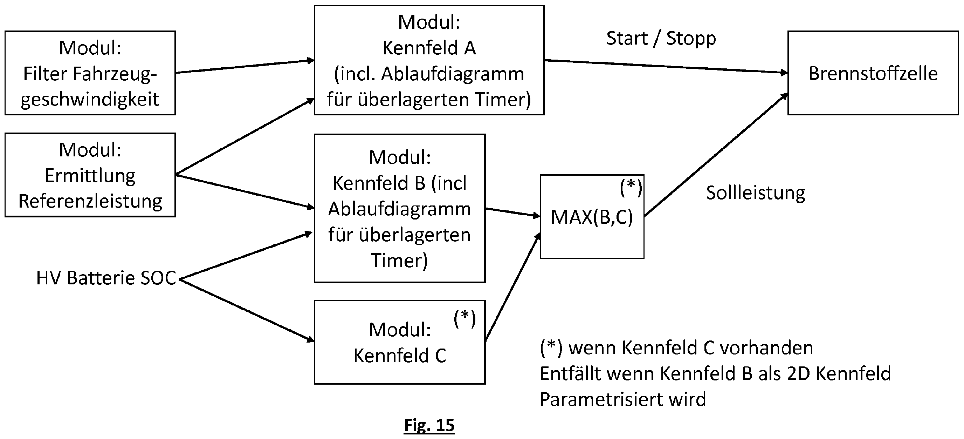

In Fig. 15 ist ein mögliches Zusammenwirken von Modulen in einem Steuergerät des Hybridfahrzeuges dargestellt. Die Steuerung weist zur Ermittlung der Eingangsgrößen ein Modul zur Ermittlung der Referenzleistung (aktueller Leistungsbedarf) M1 und ein Modul zur Filterung der Fahrzeuggeschwindigkeit M2 auf, sowie eine Erfassung des Ladezustands des Energiespeichers (HV Batterie SOC) M3.

Auf Basis der von M1 und M2 ermittelten Werte kann ein Modul für das erste Kennfeld (Kennfeld A) M4, dass ein Ablaufdiagramm für einen Timer gemäß Fig. 8 beinhalten kann, die Aktivierung oder Deaktivierung der Brennstoffzelle festlegen.

Auf Basis der von M2 und M3 bestimmten Werte kann ein Modul für das zweite Kennfeld (Kennfeld B) M5, zusammen mit einem durch M3 gespeisten Modul für die dritte Kennlinie/drittes Kennfeld/Kennfeld C, nämlich M6, festlegen, welche Leistung tatsächlich von der Brennstoffzelle angefordert wird.

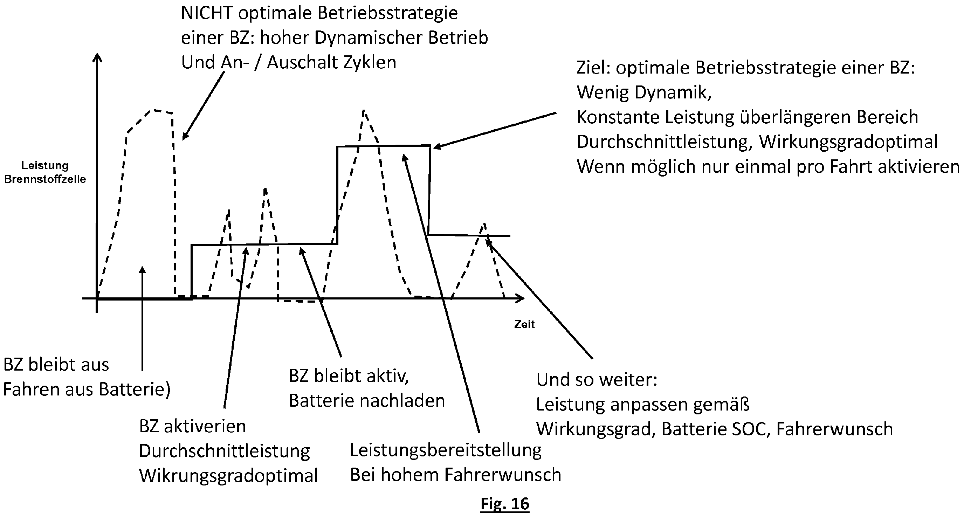

Fig. 16 zeigt schließlich ein Beispiel dafür, zu welchem Ergebnis ein erfindungsgemäßes Verfahren führen kann. Dargestellt ist die tatsächlich von der Brennstoffzelle angeforderte Leistung bei einer im Stand der Technik üblichen Betriebsstrategie für die Brennstoffzelle (gestrichelt), die eine hohe Dynamik aufweist, oftmaliges Ein- und Ausschalten der Brennstoffzelle, sowie häufig steigende und sinkende angeforderte Leistungen, sowie bei einer durch ein erfindungsgemäßes Verfahren angesteuerten Brennstoffzelle (durchgehende Linie). Das erfindungsgemäße Resultat zeigt eine wesentlich geringere Dynamik der Leistungsanforderung, wesentlich weniger Aktivierungs- und Deaktivierungsvorgänge der Brennstoffzelle, sowie im Wesentlichen kontinuierlichen Betrieb der Brennstoffzelle mit konstanter Leistung und seltenen Wechseln des angeforderten Leistungsniveaus.

Die Erfindung ermöglicht somit insgesamt die Ansteuerung einer Brennstoffzelle auf Basis von Kennfeldern, abhängig von einer Fahrerwunschleistung und der Fahrzeuggeschwindigkeit, vorzugsweise überlagert mit Hysteresen, um die Brennstoffzelle möglichst wenig An- und Abzuschalten sowie die Dynamik zu reduzieren und um letztendlich den besten Kompromiss zwischen Leistungsbereitstellung und Wirkungsgrad zu finden.

## Patentansprüche

1. Verfahren zum Betreiben einer Brennstoffzelle eines Hybridfahrzeuges, wobei das Hybridfahrzeug einen elektrischen Antrieb mit einem Energiespeicher umfasst, sowie die Brennstoffzelle umfasst, wobei durch die Brennstoffzelle der Energiespeicher aufladbar ist,
wobei die Brennstoffzelle abhängig von einem ersten Kennfeld aktiviert und deaktiviert wird, wobei eine erste Eingangsgröße des ersten Kennfeldes ein aktueller, über einen ersten definierten Betrachtungszeitraum bestehender Leistungsbedarf des Hybridfahrzeuges ist,
**dadurch gekennzeichnet, dass** falls die Brennstoffzelle aktiviert ist, die Brennstoffzelle mit einer geforderten Leistung betrieben wird, die abhängig von einem zweiten Kennfeld ist, wobei eine erste Eingangsgröße des zweiten Kennfeldes eine aktuelle Leistungsanforderung durch einen Fahrer des Hybridfahrzeuges ist, wobei die Kennlinie zum Erhöhen der geforderten Leistung der Brennstoffzelle abhängig von der ersten Eingangsgröße treppenförmig ausgebildet ist.

2. Verfahren nach Anspruch 1,
**dadurch gekennzeichnet, dass** der erste definierte Betrachtungszeitraum zwischen 1 Sekunde und 5 Minuten liegt, bevorzugt zwischen 1 Sekunde und 60 Sekunden liegt, besonders bevorzugt zwischen 3 und 20 Sekunden.

3. Verfahren nach zumindest einem der vorhergehenden Ansprüche,
**dadurch gekennzeichnet, dass** eine zweite Eingangsgröße des ersten Kennfeldes ein aktueller Ladezustand des Energiespeichers ist.

4. Verfahren nach zumindest einem der vorhergehenden Ansprüche,
**dadurch gekennzeichnet, dass** eine dritte Eingangsgröße des ersten Kennfeldes eine aktuelle Fahrzeuggeschwindigkeit ist.

5. Verfahren nach zumindest einem der vorhergehenden Ansprüche,
**dadurch gekennzeichnet, dass** die aktuelle Fahrzeuggeschwindigkeit als Eingangsgröße des ersten Kennfeldes eine über einen zweiten definierten Betrachtungszeitraum bestehende Fahrzeuggeschwindigkeit ist, wobei der zweite definierte Betrachtungszeitraum zwischen 1 Sekunde und 5 Minuten, bevorzugt zwischen 1 Sekunde und 30 Sekunden liegt, besonders bevorzugt zwischen 2 und 20 Sekunden.

6. Verfahren nach zumindest einem der vorhergehenden Ansprüche,
**dadurch gekennzeichnet , dass** das erste Kennfeld zumindest eine erste Hysterese aufweist, so dass die Kennlinie zum Aktivieren der Brennstoffzelle abhängig von der ersten Eingangsgröße verschieden ist von der Kennlinie zum Deaktivieren der Brennstoffzelle abhängig von der ersten Eingangsgröße.

7. Verfahren zumindest einem der vorhergehenden Ansprüche,
**dadurch gekennzeichnet, dass** die erste Eingangsgröße des zweiten Kennfeldes eine über einen dritten definierten Betrachtungszeitraum bestehende aktuelle Leistungsanforderung ist.

8. Verfahren nach zumindest einem der vorhergehenden Ansprüche,
**dadurch gekennzeichnet, dass** das zweite Kennfeld zumindest eine erste Hysterese aufweist, so dass die Kennlinie zum Erhöhen der geforderten Leistung der Brennstoffzelle abhängig von der ersten Eingangsgröße verschieden ist von der Kennlinie zum Reduzieren der geforderten Leistung der Brennstoffzelle abhängig von der ersten Eingangsgröße.

9. Verfahren nach zumindest einem der vorhergehenden Ansprüche,
**dadurch gekennzeichnet, dass** eine zweite Eingangsgröße des zweiten Kennfeldes ein aktueller Ladezustand des Energiespeichers ist.

10. Hybridfahrzeug, umfassend einen elektrischen Antrieb, einen Energiespeicher für den elektrischen Antrieb, eine Brennstoffzelle, sowie eine Steuereinheit, wobei durch die Brennstoffzelle der Energiespeicher aufladbar ist, **dadurch gekennzeichnet dass** die Steuereinheit zum Betreiben der Brennstoffzelle des Hybridfahrzeuges nach zumindest einem der der vorhergehenden Ansprüche eingerichtet ist.

## Claims

1. Method for operating a fuel cell of a hybrid vehicle, wherein the hybrid vehicle comprises an electric drive having a power accumulator, and also comprises the fuel cell, wherein the power accumulator is chargeable by the fuel cell,
wherein the fuel cell is activated and deactivated as a function of a first characteristic map, wherein a first input variable of the first characteristic map is a present power demand of the hybrid vehicle which exists over a first defined observation time range,
**characterized in that**, if the fuel cell is activated, the fuel cell is operated at a requested power, which is a function of a second characteristic map, wherein a first input variable of the second characteristic map is a present power request by a driver of the hybrid vehicle, wherein the characteristic curve for increasing the requested power of the fuel cell as a function of the first input variable is formed stepped.

2. Method according to Claim 1,
**characterized in that** the first defined observation time range is between 1 second and 5 minutes, preferably between 1 second and 60 seconds, particularly preferably between 3 and 20 seconds.

3. Method according to at least one of the preceding claims,
**characterized in that** a second input variable of the first characteristic map is a present charge state of the power accumulator.

4. Method according to at least one of the preceding claims,
**characterized in that** a third input variable of the first characteristic map is a present vehicle velocity.

5. Method according to at least one of the preceding claims,
**characterized in that** the present vehicle velocity, as the input variable of the first characteristic map, is a vehicle velocity existing over a second defined observation time range, wherein the second defined observation time range is between 1 second and 5 minutes, preferably between 1 second and 30 seconds, particularly preferably between 2 and 20 seconds.

6. Method according to at least one of the preceding claims,
**characterized in that** the first characteristic map has at least one first hysteresis, so that the characteristic curve for activating the fuel cell as a function of the first input variable is different from the characteristic curve for deactivating the fuel cell as a function of the first input variable.

7. Method according to at least one of the preceding claims,
**characterized in that** the first input variable of the second characteristic map is a present power request existing over a third defined observation time range.

8. Method according to at least one of the preceding claims,
**characterized in that** the second characteristic map has at least one first hysteresis, so that the characteristic curve for increasing the requested power of the fuel cell as a function of the first input variable is different from the characteristic curve for reducing the requested power of the fuel cell as a function of the first input variable.

9. Method according to at least one of the preceding claims,
**characterized in that** a second input variable of the second characteristic map is a present charge state of the power accumulator.

10. Hybrid vehicle, comprising an electric drive, a power accumulator for the electric drive, a fuel cell, and a control unit, wherein the power accumulator is chargeable by the fuel cell, **characterized in that** the control unit for operating the fuel cell of the hybrid vehicle is configured according to at least one of the preceding claims.

## Revendications

1. Procédé de fonctionnement d'une pile à combustible d'un véhicule hybride, le véhicule hybride comprenant un entraînement électrique muni d'un accumulateur d'énergie et comprenant la pile à combustible, l'accumulateur d'énergie pouvant être rechargé par la pile à combustible, la pile à combustible étant activée et désactivée en fonction d'un première diagramme caractéristique, une première grandeur d'entrée du premier diagramme caractéristique étant un besoin de puissance actuel, qui est sur une première période d'observation définie, du véhicule hybride,
**caractérisé en ce que**, si la pile à combustible est activée, la pile à combustible est utilisée à une puissance demandée qui dépend d'un deuxième diagramme caractéristique, une première grandeur d'entrée du deuxième diagramme caractéristique étant une demande de puissance actuelle d'un conducteur du véhicule hybride, le diagramme caractéristique étant conçu en forme d'escalier pour augmenter la puissance demandée de la pile à combustible en fonction de la première grandeur d'entrée.

2. Procédé selon la revendication 1,
**caractérisé en ce que** la première période d'observation définie est comprise entre 1 seconde et 5 minutes, de préférence entre 1 seconde et 60 secondes, de manière particulièrement préférée entre 3 et 20 secondes.

3. Procédé selon l'une au moins des revendications précédentes, **caractérisé en ce qu'**une deuxième grandeur d'entrée du premier diagramme caractéristique est un état de charge actuel de l'accumulateur d'énergie.

4. Procédé selon l'une au moins des revendications précédentes, **caractérisé en ce qu'**une troisième entrée du premier diagramme caractéristique est une vitesse réelle du véhicule.

5. Procédé selon l'une au moins des revendications précédentes, **caractérisé en ce que** la vitesse actuelle du véhicule en tant que grandeur d'entrée du premier diagramme caractéristique est une vitesse du véhicule sur une deuxième période d'observation définie, la deuxième période d'observation définie étant comprise entre 1 seconde et 5 minutes, de préférence entre 1 seconde et 30 secondes, de manière particulièrement préférée entre 2 et 20 secondes.

6. Procédé selon l'une au moins des revendications précédentes, **caractérisé en ce que** le premier diagramme caractéristique présente au moins une première hystérésis de sorte que le premier diagramme caractéristique destiné à l'activation de la pile à combustible en fonction de la première grandeur d'entrée soit différent du diagramme caractéristique destiné à la désactivation de la pile à combustible en fonction de la première grandeur d'entrée.

7. Procédé selon l'une des revendications précédentes, **caractérisé en ce que** la première grandeur d'entrée du deuxième premier diagramme caractéristique est une demande de puissance actuelle sur une troisième période d'observation définie.

8. Procédé selon l'une au moins des revendications précédentes, **caractérisé en ce que** le deuxième diagramme caractéristique présente au moins une première hystérésis de sorte que le premier diagramme caractéristique destiné à l'augmentation de la puissance demandée de la pile à combustible en fonction de la première grandeur d'entrée soit différent du premier diagramme caractéristique destiné à la réduction de la puissance demandée de la pile à combustible en fonction de la première grandeur d'entrée.

9. Procédé selon l'une au moins des revendications précédentes, **caractérisé en ce qu'**une deuxième grandeur d'entrée du deuxième diagramme caractéristique est un état de charge actuel de l'accumulateur d'énergie.

10. Véhicule hybride, comprenant un entraînement électrique, un accumulateur d'énergie destiné à l'entraînement électrique, une pile à combustible et une unité de commande, l'accumulateur d'énergie pouvant être chargé par la pile à combustible, **caractérisé en ce que** l'unité de commande est conçue pour faire fonctionner la pile à combustible du véhicule hybride selon l'une au moins des revendications précédentes.
